# EUROPEAN PATENT SPECIFICATION

(11) **EP 0 397 605 B1**
(45) Date of publication and mention of the grant of the patent: **13.04.1994**
(21) Application number: 90830065.0
(22) Date of filing: 27.02.1990
(51) Int. Cl.: B60B 33/02

(54) **Parking brake for twin wheels**
Parkbremse für Zwillingsräder
Dispositif de freinage de stationnement pour roulettes jumelées

(30) Priority: 11.05.1989 IT 5307289 U
(43) Date of publication of application: 14.11.1990
(73) Proprietor: TELLURE ROTA S.p.A., 41043 Formigine (Modena) (IT)
(72) Inventor: Santachiara, Andrea, I-41040 Spezzano (Modena) (IT)
(74) Representative: Bosotti, Luciano

(56) References cited:
- DE-A- 3 130 100
- FR-A- 2 098 293
- GB-A- 2 054 070
- US-A- 3 914 821

## Description

The present invention relates to a parking brake for twin wheels according to the pre-characterising portion of claim 1.

In FR-A-2 098 293 it is disclosed a parking brake for a single wheel having the above features, wherein the coaster brake is articulated by its middle portion to the support member. Therefore during the braking action the two end portions of the coaster brake contact respectively the wheel and a braking surface of a bearing for the connection between the support member and the frame of a trolley, on which the wheel is assembled. During the braking action, large and possibly harmful forces may therefore be transmitted to the bearing.

The object of the present invention is to provide a parking brake for a pair of twin wheels which is simple to produce and easy to operate.

This object is achieved by means of a parking brake further provided with the features disclosed in the characterising portion of claim 1.

The advantages and characteristics of the present invention will become clear from the following detailed description, given with reference to the appended drawings, provided by way of non-limiting example, in which:
Figure 1 is a perspective view of a parking brake according to the invention in the rest position and mounted on a pair of twin wheels of a trolley,
Figure 2 is a perspective view of the brake of Figure 1 in the operative position,
Figure 3 is a section taken on the line III-III of Figure 1, and

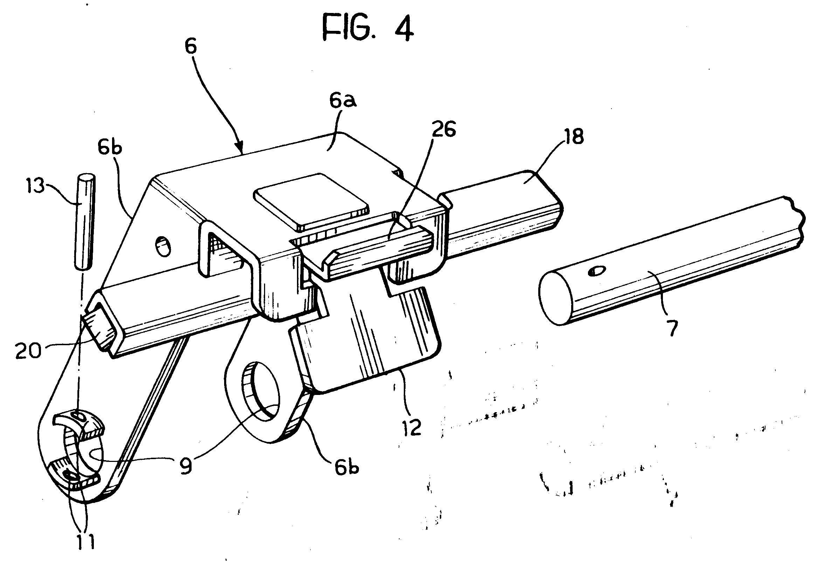

Figure 4 is a perspective view of the brake according to the invention.

With reference to the drawings, a trolley 2 has a pair of twin wheels 4 cantilevered rotatably on a support member 3 having a vertical portion 5 and a horizontal portion 7 coaxial with the axle 8 of the wheels 4.

A parking brake for the wheels 4 includes a forked support member 6 constituted by a cross-member 6a from beneath which project two arms 6b which have holes 9 for receiving the portion 7 of the support member 3. A pair of facing, apertured projections 11 is formed around the hole 9 of at least one of the arms 6b for the insertion of a resilient pin 13 for fixing the fork 6 to the horizontal portion 7 of the support member 3 in a position in which it is inclined to the vertical.

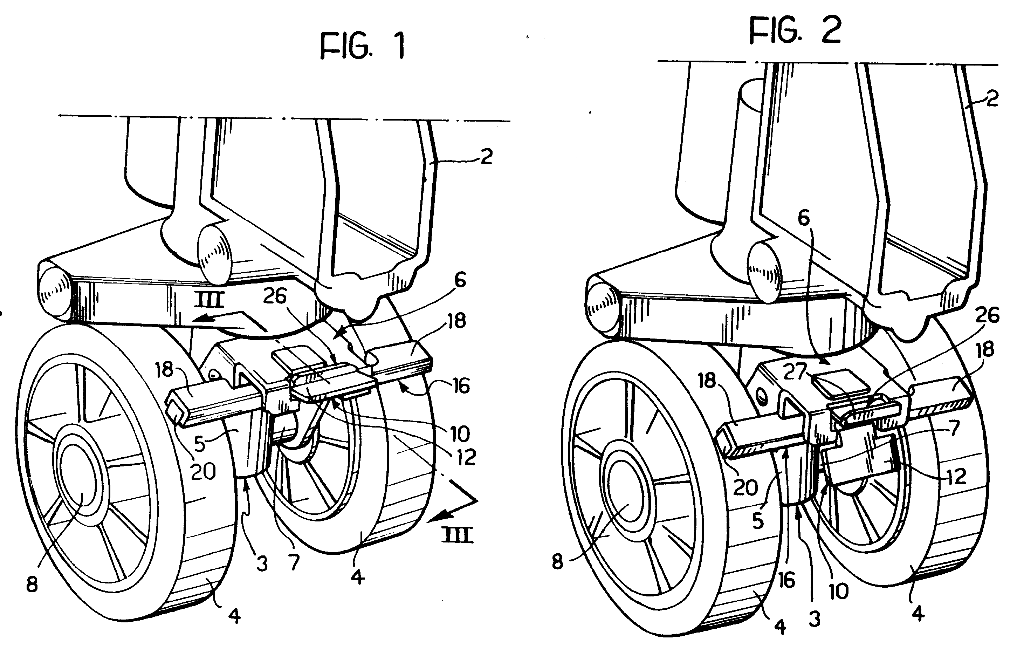

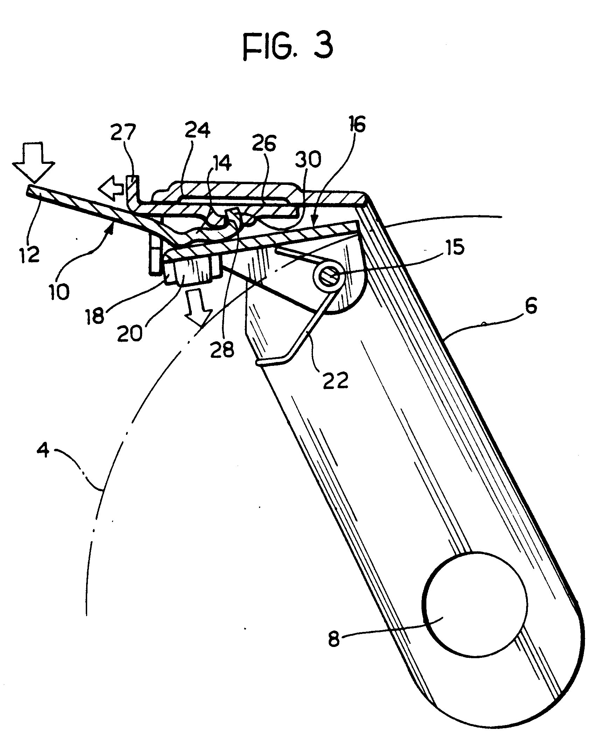

The parking brake further includes a pedal 10 having an operating portion 12 projecting from the support 6 near the cross-member 6a and a cam-shaped drive portion 14 within the support 6. The pedal 10 can pivot between a rest position (shown in Figure 1) and an operating position (shown in Figure 2).

A coaster brake 16 which is articulated, or at any rate pivoted at 15, on the support 6, is pivotable by the cam portion 14 of the pedal 10 and has two arms 18 which extend outside the support 6, parallel to the axle 8, for interfering with the wheels 4 so as to lock them as a result of the pivoting of the coaster brake. The regions of the arms 18 which will come into contact with the wheels 4 may have linings 20 of anti-friction material. A wire spring 22 keeps the arms 18 of the brake 16 spaced from the wheels 4 in the rest condition of the brake. In alternative embodiments of the invention, not illustrated, it is possible to use a leaf spring instead of the wire spring 22.

The support 6 has a seat 24 in which a small pedal 26 is inserted when the brake is in the rest condition, the small pedal 26 having an aperating portion 27 and a slot 28 in which a hook-shaped end 30 of the drive portion 14 of the pedal 10 is inserted.

To change from the rest configuration (shown in Figure 1) to the braking configuration (shown in Figure 2), it is necessary to pivot the pedal 10 by acting on its operating portion 12. The cam-shaped portion 14 of the pedal 10 thus makes the coaster brake 16 pivot about the hinge 15 to bring the anti-friction linings 20 of the arms 18 into contact with the wheels 4 and thus stop them. As the pedal 10 pivots, the hook-shaped end 30 simultaneously moves the small pedal 26 out of its seat 24.

In order to return from the braking configuration to the rest configuration, it suffices to act on the operating portion 27 of the small pedal 26 to return it, by a translational movement, into its seat 24. During this movement, the pedal 10 pivots in the opposite sense from its previous pivoting as a result of the engagement between its hook-shaped end 30 and the slot 28 in the small pedal 26, and releases the coaster brake 16 which returns to the rest position under the action of the spring 22, releasing the wheels 4.

## Claims

1. A parking brake for twin wheels (4) cantilevered rotatably on a support member (3), comprising:
a forked support member (6),
a pedal (10) with an operating portion (12) projecting from the support (6), the pedal (10) being pivotable between a rest position and an operative position,
a coaster brake (16) articulated on the support (6) and pivotable by the pedal (10) as a result of the pivoting thereof, the brake (16) having a portion (20) which is arranged to interfere with the wheels (4) as a result of its pivoting in order to stop the wheels (4),
a resilient element (22) which, in the rest position, keeps the coaster brake (16) spaced from the wheels (4), and
a small pedal (26) connected to the pedal (10) for releasing the interfering portion (20) of the coaster brake (16) from the wheels (4), said parking brake being characterised in that
- the pedal (10) has a cam-shaped drive portion (14) located within the support (6) and able to cause the pivoting of the coaster brake (16),
- the coaster brake (16) is articulated on the support (6) by an end portion opposite to the portion (20) arranged to interfere with the wheels (4), and
- the small pedal is, in the rest condition, inserted in a seat (24) within the support (6) and has an operating portion (27) and a slot (28) in which the hook-shaped end (30) of the drive portion (14) of the pedal (10) is inserted, the operation of the pedal (10) causing the removal of the small pedal (26) from its seat (24) and the operation of the operating portion (27) of the small pedal (26) causing the reinsertion of the small pedal (26) in its seat (24) and the pivoting of the pedal (10) into its rest position with the consequent release of the coaster brake (16) from the wheels (4).

2. A parking brake according to Claim 1, characterised in that the portion of the coaster brake (16) which is arranged to interfere with the wheels (4) is constituted by two arms (18) which extend outside the fork (6), substantially parallel to the axle (8) of the wheels (4).

3. An operating brake according to Claim 2, characterised in that the arms (18) have linings (20) of anti-friction material in their regions intended to contact the wheels (4).

4. A parking brake according to Claim 1, characterised in that the resilient element is constituted by a wire spring (22).

5. A parking brake according to Claim 1, characterised in that the resilient element is constituted by a leaf spring.

6. A parking brake according to any one of the preceding claims for twin wheels cantilevered rotatably on a support member (3) having a horizontal portion (7),
the brake being characterised in that the forked support member (6) is constituted by a cross-member (6a) from beneath which extend two arms (6b) which have respective holes (9) for receiving the horizontal portion (7), a pair of facing, apertured projections (11) being formed around at least one of the holes (9) for the insertion of a resilient pin (13) for fixing the support (6) to the horizontal portion (7) of the support member (3) in a position in which it is inclined to the vertical.

## Patentansprüche

1. Parkbremse für Zwillingsräder (4), welche drehbar an einem Trägerelement (3) einseitig gehalten sind, umfassend:
ein gegabeltes Trägerelement (6),
ein Pedal (10) mit einem von dem Träger (6) abstehenden Betätigungsabschnitt (12), wobei das Pedal (10) zwischen einer Ruhestellung und einer Betätigungsstellung verschwenkbar ist,
eine Trittbremse (16), welche an dem Träger (6) angelenkt ist und durch das Pedal (10) infolge des Verschwenkens desselben verschwenkbar ist, wobei die Bremse (16) einen Abschnitt (20) aufweist, der dazu ausgebildet ist, infolge seines Verschwenkens auf die Räder (4) einzuwirken, um die Räder (4) zu stoppen,
ein elastisches Element (22), welches die Trittbremse (16) in der Ruhestellung in Abstand von den Rädern (4) hält, und
ein kleines Pedal (26), welches mit dem Pedal (10) zum Lösen des Einwirkabschnitts (20) der Trittbremse (16) von den Rädern (4) verbunden ist, wobei die Parkbremse dadurch gekennzeichnet ist, daß
- das Pedal (10) einen nockenförmigen Antriebsabschnitt (14) aufweist, der in dem Träger (6) angeordnet ist und dazu geeignet ist, das Verschwenken der Trittbremse (16) zu bewirken,
- die Trittbremse (16) an dem Träger (6) durch einen Endabschnitt angelenkt ist, welcher dem zum Einwirken auf die Räder (4) ausgebildeten Abschnitt (20) gegenüber liegt, und
- das kleine Pedal in der Ruhestellung in einem Sitz (24) in dem Träger (6) eingeführt ist, und einen Betätigungsabschnitt (27) und einen Schlitz (28) aufweist, in welchem das hakenförmige Ende (30) des Antriebsabschnitts (14) des Pedals (10) eingeführt ist, wobei die Betätigung des Pedals (10) das Entfernen des kleinen Pedals (26) aus seinem Sitz (24) bewirkt und die Betätigung des Betätigungsabschnitts (27) des kleinen Pedals (26) das Wiedereinführen des kleinen Pedals (26) in seinen Sitz (24) und das Verschwenken des Pedals (10) in seine Ruhestellung mit dem daraus folgenden Lösen der Trittbremse (16) von den Rädern (4) bewirkt.

2. Parkbremse nach Anspruch 1, dadurch gekennzeichnet, daß der Abschnitt der Trittbremse (16), der dazu ausgebildet ist, auf die Räder (4) einzuwirken, von zwei Armen (18) gebildet ist, welche sich außerhalb der Gabel (6) im wesentlichen parallel zu der Achse (8) der Räder (4) erstrecken.

3. Betätigungsbremse nach Anspruch 2, dadurch gekennzeichnet, daß die Arme (18) Beläge (20) aus Anti-Friktionsmaterial in ihren zum Kontaktieren der Räder (4) bestimmten Bereichen aufweisen.

4. Parkbremse nach Anspruch 1, dadurch gekennzeichnet, daß das elastische Element von einer Drahtfeder (22) gebildet ist.

5. Parkbremse nach Anspruch 1, dadurch gekennzeichnet, daß das elastische Element von einer Blattfeder gebildet ist.

6. Parkbremse nach einem der vorhergehenden Ansprüche für Zwillingsräder, welche drehbar an einem Trägerelement (3) mit einem horizontalen Abschnitt (7) einseitig gehalten sind,
wobei die Bremse dadurch gekennzeichnet ist, daß das gegabelte Trägerelement (6) von einem Querelement (6a) gebildet ist, unterhalb dessen sich zwei Arme (6b) mit entsprechenden Löchern (9) zum Aufnehmen des horizontalen Abschnitts (7) erstrecken, wobei ein Paar sich gegenüberliegender, mit Öffnungen versehener Vorsprünge (11) um wenigstens eines der Löcher (9) gebildet ist, um zum Befestigen des Trägers (6) an dem horizontalen Abschnitt (7) des Trägerelements (3) in einer Stellung, in der er zu der Vertikalen geneigt ist, einen elastischen Stift (13) einzuführen.

## Revendications

1. Frein de stationnement pour roulettes jumelées (4) en saillie de manière à pouvoir pivoter sur un élément de support (3), comprenant:
un élément de support en fourche (6),
une pédale (10) avec une portion de commande (12) faisant saillie depuis le support (6), la pédale (10) pouvant pivoter entre une position de repos et une position de travail,
un frein (16) articulé sur le support (6) et pouvant être mis en pivotement par la pédale (10) du fait du pivotement de celle-ci, le frein (16) ayant une partie (20) qui est conçue pour interférer avec les roues (4), en réponse à son pivotement, de manière à arrêter les roues (4),
un élément élastique (22) qui, dans la position de repos, maintient le frein (16) éloigné des roues (4), et
une petite pédale (26) reliée à la pédale (10) pour libérer la portion interférante (20) du frein à (16) des roues (4), ledit frein de stationnement étant caractérisé en ce que:
la pédale (10) a une portion d'entrainement en forme de came (14) placée à l'intérieur du support (6) et en mesure d'induire le pivotement du frein (16),
le frein (16) est articulé sur le support (6) par une portion terminale opposée à la portion (20) conçue pour interférer avec les roues (4), et
la petite pédale est, dans la condition de repos, insérée dans un siège (24) à l'intérieur du support (6), et a une portion opérante (27) et une fente (28) dans laquelle est insérée l'extrémité en forme de crochet (30) de la portion d'entrainement (14) de la pédale (10), le fonctionnement de la pédale (10) provoquant le retrait de la petite pédale (26) de son siège (24), le fonctionnement de la portion opérante (27) de la petite pédale (26) provoquant la réinsertion de la petite pédale (26) dans son siège (24) et le pivotement de la pédale (10) dans sa position de repos, avec la libération en découlant du frein (16) par rapport aux roues (4).

2. Frein de stationnement selon la revendication 1, caractérisé en ce que la portion du frein (16) qui est conçue pour interférer avec les roues (4) est constituée de deux bras (18) qui s'étendent à l'extérieur de la fourche (6), sensiblement parallèles à l'axe (8) des roues (4).

3. Frein de service selon la revendication 2, caractérisé en ce que les bras (18) sont dotés de revêtements (20) en matériau anti-frottement dans leurs régions supposées en contact avec les roues (4).

4. Frein de stationnement selon la revendication 1, caractérisé en ce que l'élément résilient est constitué par un ressort métallique (22).

5. Frein de stationnement selon la revendication 1, caractérisé en ce que l'élément résilient est constitué par un ressort à lames.

6. Frein de stationnement selon l'une quelconque des revendications précédentes pour roulettes jumelées en saillie montées de manière à pouvoir pivoter sur un élément de support (3) ayant une portion horizontale (7),
le frein étant caractérisé en ce que l'élément de support en forme de fourche (6) est constitué par une traverse (6a) provenant de derrière qui étend deux bras (6b) dotés de trous respectifs (9) pour recevoir la portion horizontale (7), une paire de projections à ouvertures (11) se faisant face étant formée autour d'au moins un des trous (9) pour l'insertion d'une goupille élastique (13) servant à fixer le support (6) sur la portion horizontale (7) de l'élément de support (3), dans une position où il est incliné par rapport à la verticale.
